(19) **Europäisches Patentamt**
**European Patent Office**
**Office européen des brevets**

(11) Veröffentlichungsnummer: **0 240 812**
**B1**

(12) **EUROPÄISCHE PATENTSCHRIFT**

(45) Veröffentlichungstag der Patentschrift: **06.06.90**

(51) Int. Cl.⁵: **B 65 G 65/00**, B 65 G 61/00

(21) Anmeldenummer: **87104181.0**

(22) Anmeldetag: **21.03.87**

(54) **Magazinier-System.**

(30) Priorität: **11.04.86 DE 3612202**

(43) Veröffentlichungstag der Anmeldung:
**14.10.87 Patentblatt 87/42**

(45) Bekanntmachung des Hinweises auf die
Patenterteilung:
**06.06.90 Patentblatt 90/23**

(84) Benannte Vertragsstaaten:
**AT BE CH DE ES FR GB IT LI NL SE**

(56) Entgegenhaltungen:
**DD-C- 40 074**
**DE-A-3 337 374**
**DE-B-1 127 810**
**DE-B-2 206 437**

**IBM TECHNICAL DISCLOSURE BULLETIN, Band
25, Nr. 6, November 1982, Seiten 2770-2772,
New York, US; J.W. SCOTT "Parts tray handling
system"**

(73) Patentinhaber: **Biggel, Franz**
**Am Mühlbach 1**
**D-7988 Wangen (DE)**

(72) Erfinder: **Biggel, Franz**
**Am Mühlbach 1**
**D-7988 Wangen (DE)**

(74) Vertreter: **Patentanwälte Dipl.-Ing. E. Eisele**
**Dr.-Ing. H. Otten**
**Seestrasse 42**
**D-7980 Ravensburg (DE)**

EP 0 240 812 B1

**Beschreibung**

Die Erfindung betrifft ein Handhabungs-System zum mechanischen Be- und/oder Entladen von Paletten, Werkstückträgern, Transportkästen o. dgl. nach dem Oberbegriff des Anspruchs 1.

Aus der DE—A.3 337 374 ist eine Vorrichtung nach dem Gattungsbegriff bekannt geworden, die in ihrem Aufbau und der prinzipiellen Wirkungsweise mit dem Ausgangsgedanken der vorliegenden Erfindung übereinstimmt. Der Inhalt dieser bekannten Offenlegungsschrift wird deshalb ausdrücklich auch zum Inhalt der vorliegenden Anmeldung gemacht. Bei der bekannten Vorrichtung handelt es sich um zwei gegenüberliegende, ggf. als Magazin ausgebildete Vertikalförderer, die zwischen sich eine horizontale Transportstrecke oder auch Bearbeitungsstrecke einschließen. Die beiden Vertikalförderer weisen in ihrem unteren seitlichen Bereich jeweils wenigstens eine rotierende Nockenscheibe mit Mitnehmerbolzen auf, die die Paletten untergreifen und durch eine Drehbewegung um 180° in die jeweils nächste Taktposition fördern. Eine Zwangssteuerung zwischen den beiden Vertikalförderern und der dazwischen liegenden Transport- bzw. Bearbeitungsstrecke ermöglicht einen äußerst präzisen Transport und damit eine äußerst präzise Werkstückhandhabung des Systems.

Die bekannte Vorrichtung hat dabei jedoch den Nachteil, daß jede Vorrichtung nur auf eine bestimmte Palettengröße angepaßt ist, d.h. unterschiedlich große Paletten nicht verwendet werden können.

Der Erfindung liegt die Aufgabe zugrunde, eine Vorrichtung der eingangs erwähnten Art derart weiterzuentwickeln, daß sie universell für die verschiedensten Standardgrößen, insbesondere der sogenannten Europa-Paletten einsetzbar ist.

Diese Aufgabe wird ausgehend von einem Magazinier-System der einleitend bezeichnenden Art durch die kennzeichnenden Merkmale des Anspruchs 1 gelöst.

Der Kerngedanke der vorliegenden Erfindung liegt darin, die erfindungsgemäße Vorrichtung in einem speziellen Baukastensystem aufzubauen, um insbesondere mit ein und derselben Grundeinheit die verschiedensten Palettengrößen bearbeiten zu können. Hierfür wird die Vorrichtung in einer gewissen Grundgröße, insbesondere für eine Europa-Paletten-Norm geliefert. Jegliche Zwischengrößen von Paletten werden dadurch in das System integrierbar, indem die Breite der erfindungsgemäßen Vorrichtung an die Palettengröße angepaßt wird. Dies gilt auch für unterschiedliche Höhen der Paletten.

Erfindungsgemäß ist es deshalb vorgesehen, daß die Seitenteile bzw. Stapelwangen von der Grundeinheit abnehmbar sind, so daß ein Adapterelement zur Verbreiterung der Vorrichtung eingesetzt werden kann. Da sich die Antriebsmittel, inbesondere die Nockenscheiben in den seitlichen Stapelwangen befinden, können auch diese zur Anpassung an unterschiedlich große Palettenformen ausgetauscht werden. Hierdurch entsteht ein möglichst universell einsetzbares System, welches auch Zwischengrößen von Paletten abdeckt. Wird eine bestimmte wachsende Breite überschritten, so wird bei Erreichen der nächsten Standardgröße der Europa-Paletten-Norm die Breitseite zur Längsseite in der nächst größeren Anlage gemacht.

In den Unteransprüchen sind weitere Maßnahmen zur Lösung der erfindungsgemäßen Aufgabe bzw. zur vorteilhaften und zweckmäßigen Weiterbildung und Verbesserung des im Hauptanspruchs angegebenen Systems.

Gemäß der Ausbildung der Erfindung nach Unteranspruch 2 sind die Nockenscheiben in der Stapelwange miteinander über einen Kettenantrieb verbunden. Hiermit wird eine äußerst wirtschaftliche Lösung (hohe Präzision) zwischen der unmittelbaren Verkettung der Ent- bzw. Bestapelstation erzielt.

Die Ausbildung der Erfindung nach Unteranspruch 3 hat in Verbindung mit den Maßnahmen nach Unteranspruch 2 den Vorteil, daß ein einziger Antrieb für alle Nockenscheiben vorgesehen ist, gleichgültig ob verschieden breite Ausführungen des Magazinier-Systems verwendet werden. Hierfür wird eine in der Breite angepaßte Stekkachse als Antriebsachse verwendet.

Die gemäß Unteranspruch 4 in Verbindung mit Anspruch 6 ausgebildeten horizontalen und vertikalen Führungsleisten ermöglichen mit minimalem Aufgrund eine genaueste Positionierung der Paletten. Durch die gewählte Abschrägung sowohl an der vertikalen Führungsleiste als auch an den zugehörigen Teilen der Palette können zusätzliche Führungsflächen eingespart werden.

Die Ausbildung der Palettendistanzhalter nach Unteranspruch 5 und 6 hat darüber hinaus den Vorteil, daß auf sehr einfache Weise eine genaue Stapelbarkeit der Paletten mit genauer Indexierung ermöglicht wird.

Zur Anpassung der erfindungsgemäßen Vorrichtung an verschiedene Palettenbreiten wird die Steuereinheit gemäß der Ausbildung nach Unteranspruch 7 als Einschub ausgebildet, die jeweils durch die verschiedenen Stapelwangen und Adapter hindurchgreift.

Weitere erfindungswesentliche Merkmale und Vorteile ergeben sich aus dem nachfolgend anhand der Zeichnung näher erläuterten Ausführungsbeispiel. Es zeigen

Fig. 1 ein erfindungsgemäßes Magazinier-System in einem Anwendungsbeispiel,

Fig. 2 eine Explosionszeichnung des erfindungsgemäßen Magazinier-Systems,

Fig. 3 eine Seitenansicht einer Stapelwange mit Antriebssystem der Nockenscheiben,

Fig. 4 eine Be- bzw. Entstapelstation mit Nockenscheiben und Indexiereinrichtung für die Paletten und

Fig. 5 einen Längsschnitt durch die Paletten-Distanzhalter.

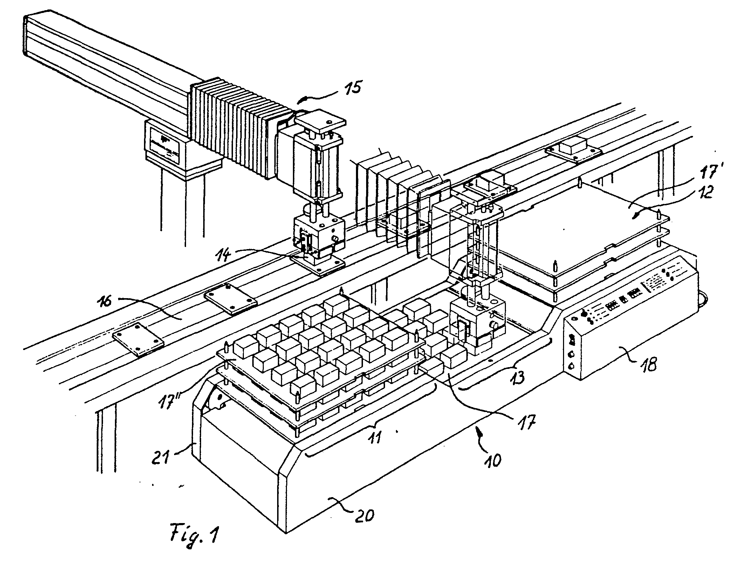

Das in der Fig. 1 mit der Bezugsziffer (10) gekennzeichnete Magazinier-System arbeitet prinzipiell nach der Lehre der deutschen Offenlegungsschrift 33 37 374. Auf den Inhalt dieser Druckschrift wird in vollem Umfang ausdrücklich Bezug genommen.

Das Magazinier-System (10) besteht hierfür aus einer Bestapelstation (11) sowie einer Entstapelstation (12) und einer dazwischen liegenden Transporteinheit bzw. Bearbeitungsstation (13). Im Ausführungsbeispiel nach Fig. 1 werden Werkstücke (14) von einem Handhabungsautomaten (15) von einem Transportband (16) auf die Paletten (17) im Bereich der Transport- oder Bearbeitungsstation (13) aufgesetzt. Hierfür werden leere Paletten (17') aus der Entstapelstation (12) entnommen und mit Werkstücken (14) besetzte volle Paletten (17'') in der Bestapelstation (11) in an sich bekannter Weise in einem als Vertikalförderer ausgebildeten Speicher gespeichert.

Die Programmier- und Steuereinheit (18) steuert den genauen Ent- und Bestapelvorgang der Stationen (12, 11) sowie den Weitertransport der Paletten zwischen den Stationen.

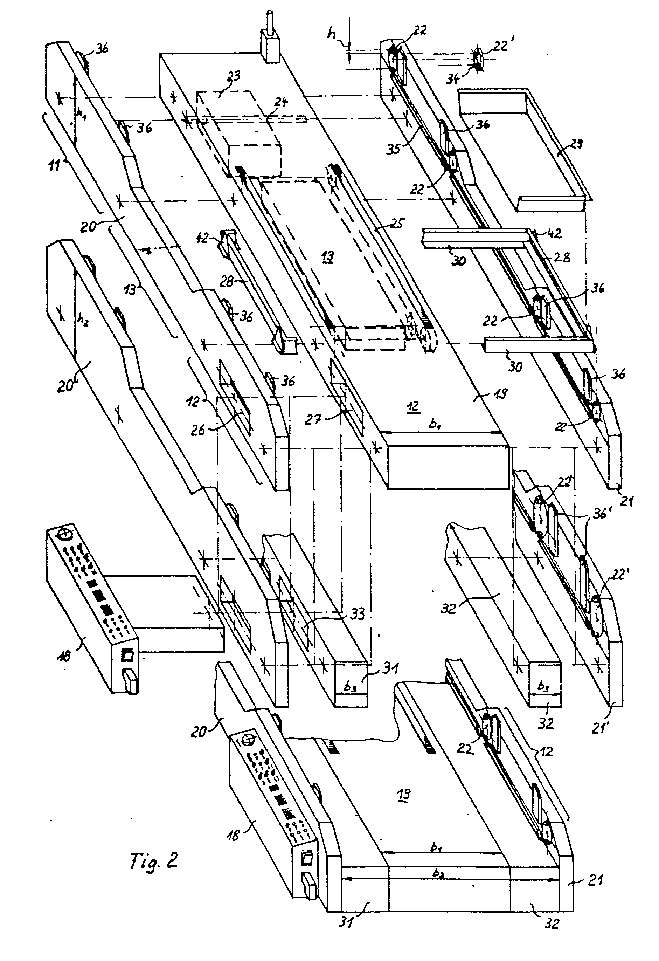

Gemäß der Darstellung der Erfindung in Fig. 2 ist das Magazinier-System (10) als Baukastensystem aufgebaut. Hierfür besteht die Vorrichtung aus einer Grundeinheit (19) die in einer bestimmten Breite $b_1$ ausgeführt ist. Durch seitliches Ansetzen einer linken (20) und rechten (21) Stapelwange wird die Grundversion gemäß der Darstellung in Fig. 1 erzeugt. Hierfür sind die Nockenscheiben (22) in die Stapelwangen selbst integriert. Die Antriebseinheit (23) mit Antriebsachse (24) befindet sich in der Grundeinheit (19). Gleichermaßen ist die Fördereinrichtung (25) mit der Transporteinheit (13) in der Grundeinheit integriert.

Die linke Stapelwange (20) enthält im vorderen Bereich der Entstapelstation (12) eine Durchschubböffnung (26), die sich in eine Öffnung (27) in der Grundeinheit (19) erstreckt, zur Aufnahme der Steuereinheit (18). Die Grundeinheit (19) enthält demnach sämtliche Antriebs- und Abfrageelemente für das Gesamtsystem.

In der Fig. 2 ist weiterhin ein Palettenrahmen (28) mit einer von diesem aufzunehmenden Tiefziehkassette (29) dargestellt. Die Seitenstege (30) des Palettenrahmens (28) können verschiedene Breiten aufweisen.

Wie in der Fig. 2 nach unten hin weiter dargestellt, ermöglicht das Baukastensystem die Aufnahme von zusätzlichen Adapterelementen (31, 32) zur Verbreiterung der Grundeinheit (19) auf eine Palettenbreite auf beispielsweise $b_2$. Hierfür werden die seitlichen Stapelwangen (20, 21) seitlich abgenommen und die Adapterelemente (31, 31) in der gewünschten Breite $b_3$ eingefügt. Dabei können die Adapterelemente (31, 32) jedes beliebige Zwischenmaß einnehmen. Eine entsprechende Durchgangsöffnung (33) im linken Adapterelement (31) ermöglicht den nachträglichen Einschuß der Steuereinheit (18).

Das Gerät ist so konzipiert, daß der Stapel- bzw. Entstapelvorgang sowie der Transportvorgang auch in umgekehrter Richtung bzw. Reihenfolge erfolgen kann und somit das Magaziniersystem als Puffer oder Speicher verwendet werden kann.

Wie in Fig. 2 weiterhin dargestellt, können auch die seitlichen Stapelwangen (20, 21) in ihrer Größe variieren. Dies ist mit den zusätzlichen Bezugszeichen (20' und 21') dargestellt. Die Stapelwangen (20, 21) wiesen beispielsweise die Bauhöhe $h_1$, die Stapelwangen (20', 21') die Bauhöhe $h_2$ im Bereich der Be- und Entstapelstation (11, 12) auf. Dementsprechend sind auch die Nockenscheiben (22) unterschiedlich groß ausgebildet, was mit den Bezugszeichen (22') für die kleineren Nockenscheiben angedeutet ist.

Es ist jedoch auch möglich, in die größeren Stapelwangen (20', 21') anstelle von größeren Nockenscheiben (22) auch kleinere Nockenscheiben (22') oder umgekehrt einzusetzen. Bei den größeren Nockenscheiben (22) laufen die Mitnehmerbolzen (34) auf einem größeren Durchmesserkreis.

Dies ist in der Fig. 2 oben angedeutet. Hierdurch können verschiedene Stapelhöhen eingestellt werden. Es ist jedoch erforderlich, daß die Führungsschienen (35) sowie die Höhe der Fördereinrichtung (25) um den Betrag "h" höhenverstellbar sind, um die unterschiedlichen Radien der Mitnehmerbolzen (34) der Nockenscheiben auszugleichen.

In der Fig. 2 sind weiterhin die vertikalen Führungsschienen (36) eingezeichnet.

Die vorstehenden Lösungsvarianten haben gemeinsam, daß sämtliche nicht veränderbare Elemente wie zum Beispiel Antriebseinheit für Stapelvorgang (23) sowie Transporteinheit (13) mit Antrieb (25) und sämtliche für den Magaziniervorgang notwendigen Abfrageelemente wie Sensoren o. dgl. in der Grundeinheit (19) integriert sind, während die übrigen Bauteile zur Anpassung des Magaziniersystems an verschiedene Palettengrößen variierbar sind und in ihrer Größe und Auslegung rein aufgabenspezifisch aufgebaut sind.

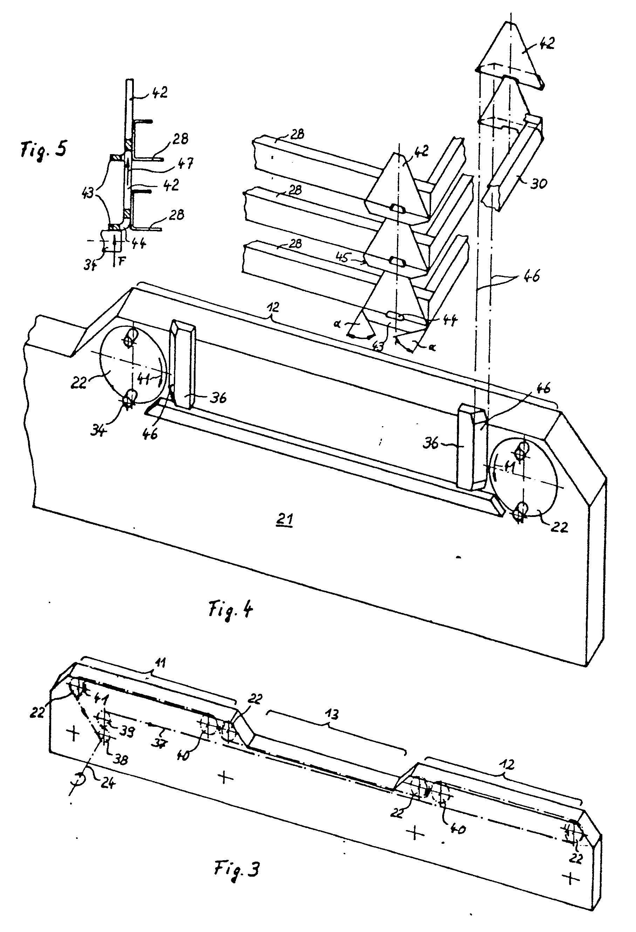

Gemäß der Darstellung der Erfindung in Fig. 3 erfolgt der Antrieb der Stapeleinheit bzw. der Antrieb der Nockenscheiben (22) über einen gemeinsamen Kettenantrieb (37). Hierfür erfolgt der in der Fig. 2 dargestellte Antrieb über die Antriebseinheit (23) auf die Antriebsachse (24) und damit auf das in der Fig. 3 dargestellte Antriebsritzel (38). Ein zusätzliches Kettenspannrad (39) dient der korrekten Verspannung der Antriebskette (37). In der Be- bzw. Entstapelstation (11) bzw. (12) müssen die jeweiligen Nockenscheiben (22) im entgegengesetzten Drehsinn arbeiten. Dies geschieht mittels Umlenkrädern (40), die eine Umkehr der Drehrichtung der Nockenscheiben bewirken, die zur Transporteinheit (13) gerichtet sind. Die in der Station (11) dargestellte linke Steuereinheit in Fig. 3 dreht deshalb gegen den Uhrzeigersinn, die rechte im Uhrzeigersinn. Umgekehrt dreht die linke Nockenscheibe in der Station (12) im Urzeigersinn, die rechte gegen den Uhrzeigersinn. Dies ist durch kleine Drehpfeile (41) dargestellt. Eine Detaildarstellung der Erfindung ist in Fig. 4 wiedergegeben. Hier ist die rechte Stapelwange (21) der Entstapelstation (12) dargestellt. Die in entgegengesetzter Richtung drehenden Nockenscheiben (22) weisen Mitnehmerbolzen (34) auf. Die Drehrichtung ist mit den Drehpfeilen (41) gekennzeichnet.

Die in Teilansicht dargestellten Palettenrahmen (28) sind mittels den Seitenstegen (30) in der Breite variabel verbunden. Der Stapelvorgang der Paletten erfolgt über die trapezförmigen Palettendistanzhalter (42), die an ihrem unteren Ende jeweils eine rechtwinklig abgeknickte Lasche (43) aufweisen. Eine Öffnung (44) im unteren Bereich des Distanzhalters (42) bzw. in einem Teil der Lasche (43) ermöglicht den Eingriff des jeweils oberen Teils des Distanzhalters (42) in die Öffnung des darüber liegenden Distanzhalters. Dies ist in der Fig. 5 im Schnitt nochmals dargestellt.

Gemäß der Erfindung ist es weiterhin wesentlich, daß die Lasche (43) in ihren Endbereichen jeweils beispielsweise um α=45° abgeschrägt ist (Bezugszeichen 45). Diese Abschrägung (45) greift in eine entsprechend angepaßte Abschrägung (46) an der vertikalen Führungsleiste (36) ein. Dies wird in der Fig. 4 durch die beiden gestrichelten Linien (46) symbolisiert. Durch diese 45°-Abschrägung (45, 46) an den Teilen (42, 36) wird mit nur vier Führungsflächen eine ausreichende Indexierung, d. h. Positionierung der Palettenrahmen (28, 30) ermöglicht. Durch die herausgeklappte Lasche (43) ist es weiterhin möglich, daß der Stapelnokken (34) direkt die Palettendistanzhalter in diesem Bereich untergreifen kann. Dies ist in Fig. 5 mit der Stapelkraft F angedeutet. Dabei bleibt der Kraftfluß entsprechend dem Pfeil (47) direkt in den Stapellaschen. Dadurch kann der Palettenrahmen eine sehr leichte Bauweise aufweisen. Die Laschen (43) sind deshalb gleichzeitig als Indexierungslaschen in Verbindung mit den vertikalen Führungsschienen (36) und als Stapellaschen in Verbindung mit den Mitnehmerbolzen (34) ausgebildet.

## Patentansprüche

1. Handhabungs-System zum mechanischen Ent- und/oder Bestapeln von Paletten, Werkstückträgern, Transportkästen o. dgl. mit einer Ent- und einer Bestapelstation (12, 11), die als die Paletten (17) o. dgl. speichernde Vertikalförderer (11, 12) ausgebildet sind, mit einer zwischen diesen Stationen (11, 12) liegenden Horizontal-Transporteinrichtung mit Bearbeitungsstation (13), auf welcher die Paletten (17) o. dgl. zwischen den Stapelstationen (11, 12) transportierbar und bearbeitbar sind, wobei jede Ent- bzw. Bestapelstation (12, 11) an wenigstens einer, zur horizontalen Transportrichtung parallel liegenden Längsseite wenigstens eine drehbar angeordnete Nockenscheibe (22) zur Durchführung der Hubbewegung der Paletten (17) o. dgl. aufweist, die die Palette (17) o. dgl. mittels rotierender Mitnehmerbolzen (34) o. dgl. untergreift und durch Drehung der Nockenscheiben (22) abwärts bzw. aufwärts fördert, dadurch gekennzeichnet, daß die Be- und Entstapelstation (11, 12) sowie die dazwischen liegende Transporteinrichtung (13) seitlich von durchgehenden Stapelwangen (20, 21) begrenzt sind, in die die Nockenscheiben (22) integriert sind, daß die Stapelwangen (20, 21) in ihrer Größe variierbar und von der Be- und Entstapelstation (11, 12) sowie der Transporteinheit (13) lösbar ausgebildet sind und daß zwischen den seitlichen Stapelwangen (20, 21) und der aus der Be- und Entstapelstation (11, 12) sowie der dazwischen liegenden Transporteinheit (13) gebildeten Grundeinheit (19) in der Breite $b_3$ variierbare Adapterstücke (31, 32) einpaßbar sind.

2. System nach Anspruch 1, dadurch gekennzeichnet, daß in der Größe variierbare Nockenscheiben (22, 22') in den Stapelwangen (20, 20', 21, 21') integrierbar sind und in der Be- und Entstapelstation (11, 12) miteinander über eine Antriebskette (37) o. dgl. verbunden sind, wobei jeweils ein Umlenkrad (40) zur Umkehr der Drehrichtung einer Nockenscheibe in einer Station (11, 12) vorgesehen ist.

3. System nach Anspruch 1 oder 2, dadurch gekennzeichnet, daß der Antrieb aller Nockenscheiben über eine zentrale Antriebseinheit (23) in der Grundeinheit (19) erfolgt, wobei eine in der Breite variable Steckachse (24) verwendbar ist.

4. System nach einem oder mehreren der vorhergehenden Ansprüche, dadurch gekennzeichnet, daß die Stapelwangen (20, 21) horizontale (35) und vertikale (36) Führungsleisten für die Palettenrahmen (28) o. dgl. aufweisen, wobei die Vertikalen (36) um die Höhe (h) verstellbar sind.

5. System nach einem oder mehreren der vorhergehenden Ansprüche, dadurch gekennzeichnet, daß in der Breite verschiedene Palettengrößen verwendbar sind, die seitlich wenigstens jeweils zwei trapezförmige Palettendistanzhalter (42) aufweisen, mit im unteren Bereich vorgesehenen Aufnahmeöffnungen (44) für den darunter liegenden Palettendistanzhalter.

6. System nach Anspruch 4 oder 5, dadurch gekennzeichnet, daß der seitlicher an den Palettenrahmen (28) befestigte Palettendistanzhalter (42) an der längeren unteren Schenkelseite eine horizontale Abstütz- und Führungslasche (43) mit seitlich abgeschrägten Kanten (45) aufweist und daß die Abschrägungen (45) mit abgeschrägten Flächen (46) der vertikalen Führungsleisten (36) zusammenwirken.

7. System nach einem oder mehreren der vorhergehenden Ansprüche, dadurch gekennzeichnet, daß eine Steuereinheit (18) vorgesehen ist, die als Einschuß in den seitlichen Bereich der Stapelwangen (20) ausgebildet ist.

8. System nach einem oder mehreren der vorhergehenden Ansprüche, dadurch gekenzeichnet, daß die Grundeinheit (19) sämtliche Antriebs- und/oder Abfrageelemente und/oder Versorgungseinrichtungen für das Baukastensystem enthält.

9. System nach einem oder mehreren der vorhergehenden Ansprüche, dadurch gekennzeichnet, daß die Grundeinheit (19) den Antrieb (25) für die Transporteinheit (13) enthält.

## Revendications

1. Système de manipulation pour l'empilage et le déchargement de palettes, supports de pièces, caisses de transport ou analogues, comportant un poste d'empilage (11) et un poste de déchargement (12), qui sont réalisés en tant que transporteurs verticaux (11, 12) emmagasinant les palettes (17) ou analogues, comportant un dispositif de transport horizontal, se trouvant entre ces postes (11, 12), ayant un poste de traitement (13), sur lequel les palettes (17), ou analogues, peuvent être transportées et traitées entre les postes d'empilage (11) et de déchargement (12), chaque poste d'empilage (11) et de déchargement (12) présentant, sur au moins un côté longitudinal parallèle à la direction de transport horizontale, au moins un disque à cames (22), agencé de façon rotative, pour la réalisation du mouvement de levage des palettes (17) ou analogues, qui engage les palettes (17) ou analogues au moyen de broches d'entraînement (34) ou analogues rotatives et les transporte, vers le haut et vers le bas, par rotation des disques à cames (22), caractérisé en ce que le poste d'empilage (11) et le poste de déchargement (12), ainsi que le dispositif de transport (13) se trouvant entre eux, sont limités latéralement par des parois de pile (20, 21) continues, dans lesquelles sont intégrés les disques à cames (22), en ce que les parois de pile (20, 21) sont de taille variable et sont réalisées de façon détachable du poste d'empilage (11) et du poste de déchargement (12), ainsi que de l'unité de transport (13), et en ce que, entre les parois latérales de pile (20, 21) et l'unité de base (19), formée par le poste d'empilage (11) et le poste de déchargement (12) ainsi que l'unité de transport (13) se trouvant entre eux, peuvent être adaptées des pièces d'adaptation (31, 32) de largeur $b_3$ variable.

2. Système selon la revendication 1, caractérisé en ce que des disques à cames (22, 22') de taille variable peuvent être intégrés dans les parois de pile (20, 20', 21, 21') et sont reliés ensemble, dans les postes d'empilage (11) et de déchargement (12), par l'intermédiaire d'une chaîne d'entraînement (37) ou analogue, une roue de renvoi (40) pour inverser le sens de rotation d'un disque à came étant, à chaque fois, prévue dans un poste (11, 12).

3. Système selon la revendication 1 ou 2, caractérisé en ce que l'entraînement de tous les disques à cames a lieu par l'intermédiaire d'une unité d'entraînement centrale (23) dans l'unité de base (19), une arbre de roue (24) de largeur variable étant utilisable.

4. Système selon une ou plusieurs des revendications précédentes, caractérisé en ce que les parois de pile (20, 21) présentent des baguettes de guidage horizontales (35) et verticales (36) pour les cadres (28) des palettes ou analogues, les verticales (36) étant réglables de la hauteur (h).

5. Système selon une ou plusieurs des revendications précédentes, caractérisé en ce que des tailles de palettes de largeurs différentes sont utilisables, qui présentent latéralement au moins, à chaque fois, deux entretoises trapézoïdales (42) de palettes, ayant des ouvertures de réception (44), prévues dans la zone inférieure, pour les entretoises de palettes se trouvant en-dessous.

6. Système selon la revendication 4 ou 5, caractérisé en ce que l'entretoise (42) fixée latéralement au cadre (28) de palette présente, sur le côté inférieure le plus long, une patte de guidage et d'appui horizontale (43) à bords latéralement chanfreinés (45), et en ce que les chanfreins (45) coopèrent avec des surfaces chainfreinées (46) des baguettes de guidage verticales (36).

7. Système selon une ou plusieurs des revendications précédentes, caractérisé en ce qu'une unité de commande (18) est prévue, qui est réalisée en tant que pièce rapportée dans la zone latérale des parois de pile (20).

8. Système selon une ou plusieurs des revendications précédentes, caractérisé en ce que l'unité de base (19) comporte tous les éléments d'entraînement et/ou d'interrogation et/ou les dispositifs d'alimentation pour le système modulaire.

9. Système selon une ou plusieurs des revendications précédentes, caractérisé en ce que l'unité de base (19) comporte l'entraînement (25) pour l'unité de transport (13).

## Claims

1. A handling system for the mechanical stacking and/or de-stacking of pallets, workpiece carriers, transporter boxes or the like, with a stacking and de-stacking station (11, 12) which is constructed as vertical conveyors (11, 12) for storing the pallets (17) or the like and with, disposed between these stations (11, 12), a horizontal conveyor means with a processing station (13) on which the pallets (17) or the like can be transported between the stacking stations (11, 12) and processed, each stacking or de-stacking station (11, 12) comprising on at least one long side which is parallel with the horizontal direction of feed, at least one rotatably disposed cam plate (22) for carrying out the lifting movement of the pallets (17) or the like and which comprises rotating entraining pegs (34) or the like which engage under the pallet (17) or the like, moving it upwardly or downwardly by rotation of the cam plates (22), characterised in that the stacking and de-stacking station (11, 12) as well as the intermediate conveyor means (13) are laterally defined by continuous stack-defining walls (20, 21), into which the cam plates (22) are integrated and in that the stack-defining walls (20, 21) are of variable size and are constructed to be separable from the stacking and de-stacking station (11, 12) and from the conveyor unit (13) and in that between the lateral stack-defining walls (20, 21) and the basic unit (19) constituted by the stacking and de-stacking station (11, 12) and the conveyor means (13) disposed between them, it is possible to fit adaptor members (31, 32) of which the width $b_3$ can be varied.

2. A system according to Claim 1, characterised in that variable-size cam plates (22, 22′) can be integrated into the stack-defining walls (21, 21′) and are connected to one another in the stacking and de-stacking station (11, 12) via a drive chain (37) or the like, a deflector wheel (14) being provided to reverse the direction of rotation of a cam plate in a station (11, 12).

3. A system according to Claim 1 or 2, characterised in that all the cam plates are driven via a central drive unit (23) in the basic unit (19), provision being made for the use of a variable-width insertable spindle (24).

4. A system according to one or more of the preceding Claims, characterised in that the stack-defining walls (20, 21) comprise horizontal (35) and vertical (36) guide strips for the pallet frames (28) or the like, the vertical guide strips (36) being adjustable by the height (h).

5. A system according to one or more of the preceding Claims, characterised in that it is possible to use pallet sizes which differ in their width but which laterally comprise at least two trapezoidal pallet spacers (42) comprising in their bottom portion apertures (45) adapted to receive the pallet spacers beneath them.

6. A system according to Claim 4 or 5, characterised in that the pallet spacer (42) fixed laterally on the pallet frame (28) has on its longer bottom side a horizontal supporting and guide tab (43) having laterally angled edges (45) and in that the angled edges (45) co-operate with chamfered surfaces (46) on the vertical guide strips (36).

7. A system according to one or more of the preceding Claims, characterised in that a control unit (18) is provided which is constructed as a slide-in module for insertion into the lateral portion of the stack-defining walls (20).

8. A system according to one or more of the preceding Claims, characterised in that the basic unit (19) contains all the drive and/or retrieval elements and/or supply means for the unit construction system.

9. A system according to one or more of the preceding Claims, characterised in that the basic unit (19) contains the drive (25) for the conveyor unit (13).

Fig. 1

Fig. 2

Fig. 5

Fig. 4

Fig. 3